# EUROPÄISCHE PATENTSCHRIFT

(11) **EP 3 669 452 B1**
(45) Veröffentlichungstag und Bekanntmachung des Hinweises auf die Patenterteilung: **30.03.2022**
(21) Anmeldenummer: 18772714.4
(22) Anmeldetag: 16.08.2018
(51) Int. Cl.: H02P 8/32

(54) **VERFAHREN UND SCHALTUNGSANORDNUNG ZUR RESONANZDÄMPFUNG BEI SCHRITTMOTOREN**
METHOD AND CIRCUIT ASSEMBLY FOR THE RESONANCE DAMPING OF STEPPER MOTORS
PROCÉDÉ ET AGENCEMENT DE CIRCUIT D'ATTÉNUATION DE RÉSONANCE DANS DES MOTEURS PAS-À-PAS

(30) Priorität: 17.08.2017 DE 102017118837
(43) Veröffentlichungstag der Anmeldung: 24.06.2020
(73) Patentinhaber: Maxim Integrated Products, Inc., San Jose, CA 95134 (US)
(72) Erfinder: DWERSTEG, Bernhard, 25462 Rellingen (DE)
(74) Vertreter: Canzler & Bergmeier Patentanwälte Partnerschaft mbB
(86) Internationale Anmeldenummer: PCT/DE2018/100718
(87) Internationale Veröffentlichungsnummer: WO 2019/034212

(56) Entgegenhaltungen:
- EP-A1- 0 833 439
- US-A- 4 682 092
- US-A1- 2015 303 850
- SORIN MANEA: "AN1307, Stepper Motor Control with dsPIC(R) DSCs", MICROCHIP AN1307, MICROCHIP TECHNOLOGY INC , 26. März 2009 (2009-03-26), Seiten DS01307A-1, XP002730008, Gefunden im Internet: URL:http://www.microchip.com/stellent/grou ps/techpub_sg/documents/appnotes/en546027. pdf [gefunden am 2014-09-22]

## Beschreibung

Die Erfindung betrifft ein Verfahren und eine Schaltungsanordnung zur Dämpfung von Schrittmotor-Resonanzen beim Betrieb eines Schrittmotors insbesondere in einem mittleren und hohen Drehzahlbereich.

Bei Schrittmotoren wird bekanntlich ein magnetischer Rotor durch ein gesteuertes, mit statischen Motorspulen erzeugtes und schrittweise rotierendes elektromagnetisches Feld schrittweise um jeweils einen entsprechenden Winkel gedreht.

Dabei besteht häufig der Wunsch, den Motor mit möglichst kleinen Schrittwinkeln drehen zu können, um eine möglichst hohe Auflösung bzw. Genauigkeit der Positionierung und einen gleichmäßigeren Drehmomentverlauf zu erzielen. Aus diesem Grunde wird anstelle des bekannten Vollschritt- und Halbschritt-Betriebes der so genannte Mikroschrittbetrieb bevorzugt, bei dem die durch die Motorspulen fließenden Ströme nicht nur ein- und ausgeschaltet werden, sondern in bestimmter Weise ansteigen und abfallen. Die Auflösung und die Gleichmäßigkeit, mit der der Schrittmotor die Mikroschritte ausführt, hängt dabei im Wesentlichen davon ab, mit wie viel verschiedenen Stromamplituden die Motorspulen angesteuert werden und wie genau diese eingehalten werden können. Dabei ist eine sinusförmige bzw. kosinusförmige Erregung der Motorspulen im Allgemeinen am zweckmäßigsten, da damit bei Mikroschritt-optimierten Motoren auch ein sehr kontinuierliches, d.h. ruckfreies Drehen und somit ein ruhiger Motorlauf sowie eine hohe Positionsauflösung erzielt werden kann.

Zum elektrischen Ansteuern von Schrittmotoren insbesondere im Mikroschrittbetrieb dienen zum Beispiel bekannte Chopper-Verfahren, mit denen mit Hilfe einer Motor-Versorgungsspannung (Gleichspannung) in jede der Motorspulen die für jeden Zeitpunkt durch eine Stromvorgabe (Soll-Spulenstrom) gegebene Stromrichtung und Stromhöhe bzw. Stromform mittels PWM-Strompulsen eingeprägt wird, um mit dem dadurch induzierten, rotierenden Magnetfeld den Rotor des Motors anzutreiben.

Es hat sich jedoch gezeigt, dass Schrittmotoren im Betrieb unterschiedlichen Resonanzen unterliegen können, die sich in Abhängigkeit von der Motordrehzahl unterschiedlich stark ausprägen und auch bei Ansteuerung des Motors mittels eines Chopper-Verfahrens oftmals nicht hinreichend unterdrückt werden können.

Insbesondere im Bereich mittlerer und hoher Drehzahlen und bei Geschwindigkeitssprüngen, bei denen das Drehmoment des Motors absinkt, können unerwünschte Motorresonanzen auftreten, die sich auch im Mikroschrittbetrieb nur unwesentlich unterdrücken lassen. Ferner können solche Resonanzen insbesondere bei konstanter Drehzahl auch durch Schwebungen zwischen Drehzahl und Chopperfrequenz oder durch eine ungünstige Rücckopplung von der in den Motorspulen induzierten Gegen-EMK auf die Chopperansteuerung verursacht werden.

Auch wenn diese Resonanzen im Allgemeinen nur geringe Energie aufweisen, können sie sich bei fehlender Dämpfung im ungünstigen Fall über viele 10 Stromperioden aufschaukeln und dann zu einem Schrittverlust des Motors führen.

Diese Resonanzen könnten natürlich dadurch vermieden bzw. reduziert werden, dass auf die betreffenden kritischen Drehzahlbereiche verzichtet wird oder diese schnell durchfahren oder andere Maßnahmen bei der Auslegung der Geschwindigkeitskurve getroffen werden. Auch könnten auf mechanischer Seite Gummidämpfer oder geeignete Kupplungen verwendet werden. All dies wird jedoch als nachteilig angesehen.

Die Verhinderung von Resonanzen mit geberbasierten regeltechnischen Verfahren kommt im Allgemeinen deshalb nicht in Betracht, weil die betreffenden Motoren aus Kostengründen üblicherweise als rein gesteuerte Systeme betrieben werden.

Zur ansteuerseitigen Reduktion von Resonanzen könnten Verfahren zur Gegen-EMK-basierten Detektion und aktiven Dämpfung von Resonanzen oder passive Dämpfungsverfahren verwendet werden, bei denen überschüssige Energie aus den Schwingungen entweder in thermische Energie (Motor-Innenwiderstand) umgewandelt oder aber in die Versorgungsspannungsquelle des Motors zurückgespeist wird. Bei mittleren und hohen Drehzahlen ist dies aber im Vergleich zu niedrigen Drehzahlen nicht oder nur unzureichend möglich, da dann die elektrische Kommutierungsfrequenz eines Schrittmotors in eine vergleichbare Größenordnung wie die typische Chopperfrequenz kommt, die üblicherweise geringfügig oberhalb von 16 kHz liegt.

Aus der JP H07-95799A ist es bekannt, die durch eine Motorspule fließenden Ströme mittels einer Brückenschaltung aus vier Halbleiterschaltern zu schalten und bei einem vorgegebenen fallenden Spulenstrom sämtliche Halbleiterschalter zu sperren und den Spulenstrom über parallel zu den Halbleiterschaltern geschaltete Dioden beschleunigt abzubauen, um damit eine höhere Motordrehzahl zu ermöglichen.

Weiterhin ist aus der US 2016/0352272 A1 eine Motorsteuerung bekannt, bei der H-Brückenschaltungen für die Motorspulen zur Verminderung der Verlustleistung so geschaltet werden, dass ein abzubauender Spulenstrom in eine Leistungsversorgung zurückgespeist wird.

Die US 4,682,092 A offenbart einen Schrittmotor, bei dem Stromimpulse von einer Quelle an die Wicklungen des Schrittmotors angelegt werden. Ein Chopper reguliert die Wicklungsströme während jedes Stromimpulses durch vier Steuerphasen, nämlich eine Leistungsphase, eine erste Zirkulationsphase, eine Rücksetzphase und eine zweite Zirkulationsphase. Während der Leistungsphase ermöglicht der Chopper den Strom von der Quelle zur zugehörigen Motorwicklung. Der Chopper deaktiviert die Quelle und zwingt den Reststrom während der beiden Zirkulationsphasen vollständig innerhalb des Schaltkreises, d.h. außerhalb der Quelle. Zudem veranlasst der Chopper den Stromfluss von der Wicklung zur Quelle während der Rücksetzphase. Mittels dieser Merkmale, insbesondere der zweiten Zirkulationsphase, können die zu Wirbelstromverlusten führenden Welligkeitsströme reduziert werden.

Die eingangs genannte Problematik der Ausbildung von Motorresonanzen wird in diesen Druckschriften jedoch nicht behandelt.

Der Erfindung liegt deshalb die Aufgabe zugrunde, ein Verfahren und eine Schaltungsanordnung anzugeben, mit dem/der ein Schrittmotor insbesondere im Bereich mittlerer und hoher Drehzahlen und insbesondere im Mikroschrittbetrieb auf relativ einfache Weise zumindest weitgehend resonanzfrei betrieben werden kann.

Gelöst wird diese Aufgabe mit einem Verfahren gemäß Anspruch 1 und einer Schaltungsanordnung gemäß Anspruch 6.

Ein wesentliches Erfindungsprinzip besteht dabei darin, im Nulldurchgang eines vorgegebenen Soll-Spulenstroms (und vorzugsweise in einem diesen Nulldurchgang zeitlich umgebenden Bereich) passive Fast-Decay (FD-) Phasen zu aktivieren, mit denen der tatsächliche Spulenstrom durch Rückspeisung in die Versorgungsspannungsquelle sehr schnell abgebaut und dadurch im Wesentlichen auf den Wert Null gebracht wird, um dadurch insbesondere im Bereich mittlerer und hoher Drehzahlen, bei denen das Motor-Drehmoment absinkt und der Motor deshalb besonders resonanz-empfindlich ist, solche Resonanzen weitgehend zu vermeiden. Dadurch werden auch Lastwinkelschwingungen des Motors, die durch Resonanzen oder Drehzahlsprünge verursacht werden und zu einer in den Spulen induzierten Gegen-EMK führen, entsprechend gedämpft bzw. unterdrückt.

Versuche haben gezeigt, dass die passiven FD-Phasen auch bei jedem Nulldurchgang des Soll-Spulenstroms unabhängig von einer aktuellen Motordrehzahl aktiviert werden können, ohne dass dadurch im niedrigen oder mittleren Drehzahlbereich der tatsächliche Spulenstrom in unerwünschter Weise beeinflusst wird.

Zur Aktivierung der passiven FD-Phasen sind die Motorspulen vorzugsweise in jeweils eine Halbleiter-Brückenschaltung geschaltet, über die eine Versorgungsspannung +V_{M} einer Versorgungsspannungsquelle an die Motorspulen angelegt wird, um durch entsprechendes Öffnen und Schließen der Halbleiterschalter (zum Beispiel MOSFETs) die zu jedem Zeitpunkt jeweils vorgegebenen Soll-Spulenstromwerte mit vorgegebener Polarität in die Motorspulen einzuprägen. Die passiven FD-Phasen werden dann vorzugsweise dadurch aktiviert, dass im Nulldurchgang des Soll-Spulenstroms (und vorzugsweise in einem diesen Nulldurchgang zeitlich umgebenden Bereich) alle Halbleiterschalter geöffnet bzw. sperrend geschaltet werden und dadurch die dann noch fließenden tatsächlichen Spulenströme entweder über die in den Halbleiterschaltern intrinsisch vorhandenen Invers- bzw. Bodydioden und/oder über parallel zu den Halbleiterschaltern in Sperrrichtung zwischen die positive Versorgungsspannung +V_{M} und Masse geschaltete (externe) Dioden sehr schnell in die Versorgungsspannungsquelle zurückgespeist werden, und zwar wesentlich schneller, als es mit einer nachfolgend noch erläuterten aktiven FD-Phase möglich wäre.

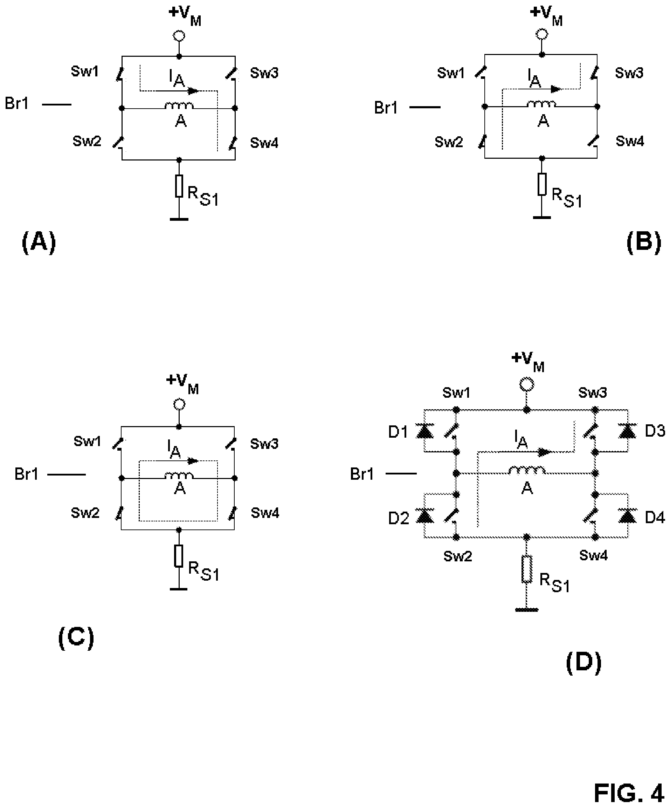

Diese passiven FD-Phasen lassen sich bevorzugt in Kombination mit einem eingangs genannten Chopper-Verfahren realisieren, bei dem die für jeden Zeitpunkt vorgegebenen Soll-Spulenstromwerte durch Aktivierung von ON-, aktiven FD- und ggf. SD-Phasen in die Spulen eingeprägt werden. Dies wird anhand von Figur 4 im Detail erläutert werden.

Ein Vorteil dieser Lösungen besteht darin, dass damit der gesamte, durch den Motor zur Verfügung gestellte Drehzahlbereich nun zumindest weitgehend resonanzfrei genutzt werden kann.

Die erfindungsgemäße Lösung wird, wie schon erwähnt, bevorzugt für den Mikroschrittbetrieb angewendet, kann aber auch für jeden anderen Motorbetrieb genutzt werden, bei dem der Spulenstrom nicht nur wie im Vollschrittbetrieb ein- und ausgeschaltet wird, sondern auch mit ansteigenden und abfallenden bzw. einer Mehrzahl von Stromamplituden zwischen dem Wert Null und dem maximal zulässigen Stromwert wie zum Beispiel im Halb-, Viertel-, Achtelschrittbetrieb etc. in die Spulen eingeprägt wird.

Die Unteransprüche haben vorteilhafte Weiterbildungen der Erfindung zum Inhalt.

Weitere Einzelheiten, Merkmale und Vorteile der Erfindung ergeben sich aus der folgenden Beschreibung von bevorzugten Ausführungsformen anhand der Zeichnung. Es zeigt:
- **Fig. 1**: Resonanzen eines Schrittmotors im Vollschrittbetrieb;
- **Fig. 2**: einen mit Resonanzen beaufschlagten Geschwindigkeitsverlauf;
- **Fig. 3**: ein mechanisches Ersatzschaltbild für einen Resonanzzustand;
- **Fig. 4**: Schaltbilder verschiedener Stromfluss-Phasen einer Motorspule während eines Chopperbetriebes;
- **Fig. 5**: ein Prinzipschaltbild einer beispielhaften Schaltungsanordnung zur Durchführung des erfindungsgemäßen Verfahrens;
- **Fig. 6**: gemessene Verläufe von Spulenstrom und Spulenspannungen bei niedriger Drehzahl;
- **Fig. 7**: gemessene Verläufe von Spulenstrom und Spulenspannungen bei mittlerer Drehzahl ohne Motorlast;
- **Fig. 8**: gemessene Verläufe von Spulenstrom und Spulenspannungen bei mittlerer Drehzahl mit Motorlast;
- **Fig. 9**: gemessene Verläufe von Spulenstrom und Spulenspannungen bei hoher Drehzahl mit Resonanzen; und
- **Fig. 10**: gemessene Verläufe von Spulenstrom und Spulenspannungen bei hoher Drehzahl ohne Resonanzen.

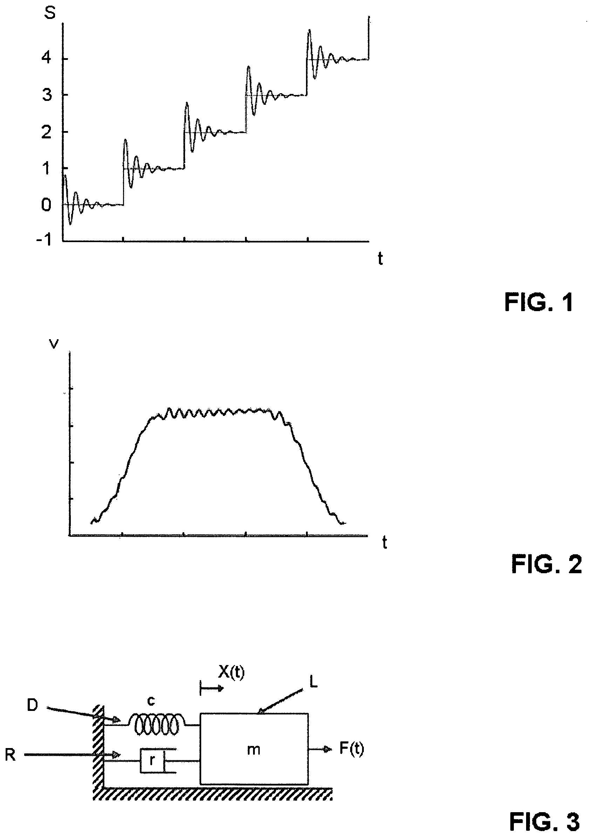

Figur 1 zeigt zur Verdeutlichung der der Erfindung zugrunde liegenden Problematik Resonanzen eines Schrittmotors im Vollschrittbetrieb. Auf der vertikalen Achse ist die Anzahl der Vollschritte S, auf der horizontalen Achse die Zeit t aufgetragen. Die Darstellung zeigt, dass nach dem Ausführen eines Schrittes der Rotor resonante Schwingungen ausführt, deren Amplituden anfänglich bis fast zu der nächsten bzw. vorhergehenden Schrittposition reichen können und dann abklingen. Ein solches Verhalten kann entsprechend auch im Halb-, Viertel-, Achtelschrittbetrieb etc. sowie im Mikroschrittbetrieb auftreten und einen deutlichen Drehmomentverlust und ggf. auch Schrittverluste zur Folge haben.

Figur 2 zeigt beispielhaft einen Geschwindigkeitsverlauf eines Schrittmotors, wobei auf der vertikalen Achse die Geschwindigkeit v und auf der horizontalen Achse die Zeit t aufgetragen ist. Aus dieser Darstellung wird deutlich, dass auch bei Geschwindigkeitssprüngen wie beim dargestellten Übergang von einer Beschleunigung zu einer konstanten Geschwindigkeit bzw. Drehzahl des Motors die genannten Schwingungen bzw. Resonanzen entstehen können, die nur allmählich abklingen. Auch hierbei können spürbare Drehmomentverluste und ggf. auch Schrittverluste auftreten.

Figur 3 zeigt ein mechanisches Äquivalenzschaltbild dieses resonanten Motorverhaltens. Die Last L des Motors entspricht dabei einer Masse m, auf die einerseits das Drehmoment D des Motors, entsprechend einer Feder mit einer Federkonstanten c, und andererseits eine Reibung R, entsprechend einem Dämpfungsglied mit einer Dämpfungskonstanten r, einwirkt, so dass auf die Masse m eine Kraft F(t) ausgeübt wird, die zu einer Verschiebung X(t) der Masse m (entsprechend einer Motordrehung) in Form einer abklingenden Schwingung führt.

In den Figuren 4(A) bis (D) sind Schaltbilder mit einer Motorspule A und Spulenströmen I_{A} in vier verschiedenen Stromfluss-Phasen dargestellt.

Diese Figuren zeigen jeweils eine Brückenschaltung Br1 aus einem ersten bis vierten Schalter Sw1, Sw2, Sw3, Sw4, wobei ein erster und ein zweiter Schalter Sw1, Sw2 sowie ein dritter und ein vierter Schalter Sw3, Sw4 jeweils in Reihe geschaltet und die beiden Reihenschaltungen parallel miteinander verbunden sind. Die betreffende Motorspule A ist mit den Mittelpunkten der Brückenzweige verbunden. Der Fußpunkt der Brückenschaltung ist über einen Messwiderstand R_{S1} zur Erfassung des tatsächlichen, durch die Motorspule fließenden Motorstroms mit Masse verbunden, während der Kopf der Brückenschaltung an die Motor-Versorgungsspannungsquelle +V_{M} angeschlossen ist. Die Schalter Sw1, Sw2, Sw3, Sw4 werden mittels einer Treiberschaltung geschaltet, der wiederum Chopper-Schaltsignale zur Aktivierung der Stromfluss-Phasen zugeführt werden.

Es wird also der tatsächlich durch die betreffende Motorspule A fließende Strom gemessen und dieser in Abhängigkeit davon in positiver und negativer Richtung bzw. Polarität mittels durch PWM-Ansteuerung der Schalter geeignet aktivierter und zeitlich bemessener Stromfluss- oder Chopper-Phasen (ON, SD, FD) eines Chopper-Verfahrens so geregelt, dass er in jeder Chopper-Phase und damit über seinen gesamten Verlauf zumindest weitgehend mit dem Verlauf und der Polarität des betreffenden Soll-Spulenstroms Iₛₒₗₗ übereinstimmt.

Die Polarität des Spulenstromes ist dabei im Falle eines sinusförmigen Spulenstroms z.B. positiv im ersten und zweiten Quadranten und negativ im dritten und vierten Quadranten.

Figur 4(A) zeigt die Schalterstellungen und die daraus resultierende Richtung des Stromflusses I_{A} von der Versorgungsspannungsquelle +V_{M} durch die Spule A nach Masse während einer ersten Chopper-Phase (ON-Phase), in der diese Richtung jeweils die gleiche ist wie die momentan vorgegebene Richtung bzw. Polarität des Soll-Spulenstroms, wobei der erste und der vierte Schalter Sw1, Sw4 geschlossen und der zweite und der dritte Schalter Sw2, Sw3 geöffnet sind.

Während dieser ON-Phase (positive Einschaltphase) wird der Spulenstrom in eine Spule jeweils in Richtung der momentan vorgegebenen Polarität bzw. Richtung des Spulenstroms aktiv in die Spule eingeprägt, so dass der Spulenstrombetrag relativ schnell und kontinuierlich ansteigt (Einschaltperiode), bis er seinen momentanen Sollwert erreicht hat und die ON-Phase dann beendet wird. Die durch eine ON-Phase eingeprägte Spulenstromrichtung ist also gleich der momentanen Polarität bzw. Richtung des Spulenstroms.

Figur 4(B) zeigt die Schalterstellungen und die daraus resultierende Umpolung der Spule A sowie die Rückspeisung des Spulenstroms I_{A} in die Versorgungsspannungsquelle +V_{M} d.h. entgegen der momentan vorgegebenen Richtung bzw. Polarität des Soll-Spulenstroms (die hier die gleiche ist wie in Figur 4(A)) während einer zweiten Chopper-Phase (aktive FD-Phase), in der der erste und der vierte Schalter Sw1, Sw4 geöffnet und der zweite und der dritte Schalter Sw2, Sw3 geschlossen sind.

Während dieser aktiven FD-Phase (negative Einschaltphase) wird der Spulenstrom entgegen der gerade vorgegebenen Polarität des Soll-Spulenstroms durch Umpolen der Spule und Rückspeisung des Spulenstroms in die Versorgungsspannungsquelle +V_{M} aktiv wieder abgebaut, bis er seinen momentanen Sollwert erreicht hat und die aktive FD-Phase dann beendet wird. Alternativ dazu kann allerdings eine aktive FD-Phase auch ungeregelt nach Ablauf einer vorbestimmten Zeitdauer mit dem Ziel beendet werden, in der jeweiligen aktiven FD-Phase den in einer Applikation aufgrund von Erfahrungswerten maximal notwendigen Abbau des Spulenstroms zu gewährleisten, ohne diesen tatsächlich zu messen. Die aktive FD-Phase dient in jedem Fall dazu, den Spulenstrom insbesondere in den Phasen fallenden Spulenstrombetrages (d.h. während des zweiten und vierten Quadranten eines sinusförmigen Spulenstroms) relativ schnell abzubauen.

Figur 4(C) zeigt eine dritte Chopper-Phase (SD-Phase), bei der die Spule A kurzgeschlossen oder gebrückt ist, d.h. der zweite und der vierte Schalter Sw2, Sw4 sind geschlossen, während der erste und der dritte Schalter Sw1, Sw3 geöffnet sind (oder entsprechend umgekehrt), so dass sich der in der Spule A fließende Strom I_{A} entsprechend dem Innenwiderstand der Spule A allmählich abbaut, d.h. rezirkuliert.

Während dieser SD-Phase (Rezirkulationsphase) wird somit die betreffende Spule nicht aktiv angesteuert, sondern kurzgeschlossen bzw. gebrückt, so dass der Spulenstrom aufgrund des Innenwiderstandes der Spule und der Gegen-EMK nur allmählich (d.h. langsamer als während der FD-Phase) abfällt. In dieser Phase kann der Spulenstrom I_{A} üblicherweise nicht gemessen werden, so dass die SD-Phase nach Ablauf einer vorbestimmten Zeitdauer beendet werden muss, wobei üblicherweise für alle SD-Phasen die gleiche konstante Zeitdauer festgelegt wird.

Zusammengefasst werden also diese drei Chopper-Phasen durch von dem Chopper erzeugte und einer Treiberschaltung für die Motorspulen zugeführte Chopper-Schaltsignale zeitlich so aktiviert, kombiniert und bemessen, dass der tatsächliche Spulenstrom Iᵢₛₜ über seinen gesamten (z.B. sinusförmigen) Verlauf, also während der steigenden und der fallenden Spulenstromphasen, möglichst zeitnah und genau der entsprechenden Stromvorgabe (Soll-Spulenstrom Iₛₒₗₗ) für die betreffende Motorspule folgt.

Damit ist insbesondere im niedrigen Drehzahlbereich, in dem die Gegen-EMK des Motors (d.h. die in den Spulen durch den Rotor gegeninduzierte Spannung) kleiner ist als die Versorgungsspannung, auch eine für die meisten Fälle ausreichende Dämpfung von Motorresonanzen möglich.

Bei mittleren und hohen Drehzahlen, bei denen die Gegen-EMK des Motors die Höhe der Versorgungsspannung erreicht oder überschreitet, kann mit einem solchen Chopper-Verfahren der Soll-Spulenstrom jedoch oftmals nur noch unvollkommen in die Spulen eingeprägt werden, so dass auch die in die Spulen induzierte Gegen-EMK und die damit verbundenen Schwingungen des Motorlastwinkels bzw. Motorresonanzen nicht oder nicht ausreichend durch den Chopper-Betrieb gedämpft werden können. Dies kann jedoch durch Aktivierung von passiven FD-Phasen gemäß Figur 4(D) erreicht werden.

Figur 4(D) zeigt die Brückenschaltung Br1 aus dem ersten bis vierten Schalter Sw1, Sw2, Sw3, Sw4 sowie ferner einer ersten bis vierten Diode D1, D2, D3, D4, die zwischen der positiven Versorgungsspannungsquelle +V_{M} und Masse in Sperrrichtung geschaltet sind, wobei jeweils eine Diode parallel zu jeweils einem Schalter liegt, und wobei sämtliche Schalter Sw1, Sw2, Sw3, Sw4 geöffnet sind.

Sofern als Schalter Halbleiterschalter, insbesondere MOSFETs verwendet werden, sind die Dioden D1 bis D4 in Form der in den Halbleiterschaltern jeweils intrinsisch vorhandenen Invers- oder Body-Dioden realisiert. Alternativ oder zusätzlich können wie dargestellt auch externe und parallel zu den Schaltern geschaltete Dioden D1 bis D4 verwendet werden.

Mit dieser Schaltung wird durch Öffnen sämtlicher Schalter Sw1, Sw2, Sw3, Sw4 im Nulldurchgang des Soll-Spulenstroms Iₛₒₗₗ (und vorzugsweise in einem diesen Nulldurchgang zeitlich umgebenden Bereich) eine passive FD-Phase aktiviert, bei der der Spulenstrom I_{A} über die Dioden D4, D1 bzw. D2, D3 abgebaut und in die Versorgungsspannungsquelle +V_{M} zurückgespeist wird.

Die Dauer der passiven FD-Phase in dem den Nulldurchgang des Soll-Spulenstroms zeitlich umgebenden Bereich wird vorzugsweise experimentell für einen bestimmten, anzusteuernden Motor ermittelt und festgelegt. Sie kann auch durch einen Anwender einstellbar sein und ggf. während des Motorbetriebes an eine aktuelle Motorlast angepasst werden oder unabhängig von der Motordrehzahl konstant bleiben.

Die passiven FD-Phasen werden vorzugsweise unabhängig von einer aktuellen Motor-Drehzahl bei jedem Nulldurchgang des Soll-Spulenstroms, d.h. auch bei niedrigen Drehzahlen, aktiviert. Möglich wäre es aber auch, passive FD-Phasen nur dann zu aktivieren, wenn der Motor eine vorbestimmte, insbesondere mittlere Drehzahl erreicht oder überschreitet und/oder eine einen vorbestimmten Grenzwert überschreitende Drehzahländerung pro Zeiteinheit ausführt.

Diese passive FD-Phase hat den Vorteil, dass der tatsächliche Spulenstrom I_{A} entsprechend einem momentanen Soll-Spulenstromwert von Null besonders schnell auf diesen Wert Null abgebaut wird. Wie später anhand der Schaltungsanordnung noch erläutert werden wird, werden für diese passiven FD-Phasen die Halbleiterschalter nämlich vorzugsweise nicht wie bei der oben erläuterten ersten bis dritten Chopper-Phase durch Ansteuerung der Treiberschaltung Tr mittels des Choppers, sondern durch ein direkt der Treiberschaltung Tr zugeführtes Schaltsignal geöffnet, so dass keine Verzögerungen durch die entsprechende Erzeugung der Chopper-Schaltsignale wie bei der ersten bis dritten Chopper-Phase auftreten.

Dies führt neben dem eingangs beschriebenen Einsatz der intrinsisch vorhandenen Invers- bzw. Bodydioden und/oder der parallel zu den Halbleiterschaltern geschalteten (externen) Dioden zu einer weiteren, für die Unterdrückung von Motorresonanzen vorteilhaften Beschleunigung der Aktivierung der passiven FD-Phasen.

Sofern der Motor aufgrund von Resonanzen oder Sprüngen bzw. Stufen in der Ansteuergeschwindigkeit (Drehzahl) insbesondere bei mittleren und hohen Drehzahlen wie oben erläutert in Lastwinkelschwingungen gerät, führen diese auch zu einer entsprechenden Variation der Gegen-EMK, deren Höhe die Höhe der Versorgungsspannung erreichen und überschreiten kann. Während der passiven FD-Phase wird diese Gegen-EMK ebenfalls sehr schnell abgebaut, so dass der Nulldurchgang des tatsächlichen Spulenstroms zum Zeitpunkt des Nulldurchgangs des Soll-Spulenstroms sehr schnell und unabhängig von dem aktuellen Zustand des Choppers erzwungen oder forciert wird. Die Reaktionszeit der Dioden kann dabei vernachlässigt werden, da sie in jedem Fall wesentlich kürzer ist, als die Reaktionszeit der oben beschriebenen ersten bis dritten Chopper-Phase.

Insgesamt setzt sich also jede Periode des tatsächlichen Spulenstroms aus einer Vielzahl von Chopper-Phasen gemäß den Figuren 4(A) bis 4(C) sowie den passiven FD-Phasen gemäß Figur 4(D) zusammen, wobei letztere im Bereich des Nulldurchgangs des Soll-Spulenstroms aktiviert werden, so dass ein besonders exakter Nulldurchgang des tatsächlichen Spulenstroms erreicht wird und eventuelle Motorresonanzen und Lastwinkelschwingungen wirksam unterdrückt werden.

Bei niedrigen Motor-Drehzahlen werden eventuelle Resonanzen des Motors durch die genannten Chopper-Phasen gut gedämpft, und die passiven FD-Phasen haben einen nahezu vernachlässigbar kleinen Zeitanteil, so dass sie keinen Einfluss auf das Einprägen sauberer Sinus-Stromwellen durch die Chopper-Phasen ausüben und den Motorlauf nicht stören, zumal die passiven FD-Phasen ja auch nur dann aktiviert werden, wenn der Soll-Spulenstrom jeweils null oder nahezu null ist. Bei mittleren und hohen Motor-Drehzahlen steigt automatisch der relative zeitliche Anteil der passiven FD-Phasen, da die Nulldurchgänge der Spulenströme entsprechend schneller aufeinander folgen, so dass dann dadurch eventuelle Schwingungen bzw. Resonanzen des Motors wirksam gedämpft werden.

Da die Energie der zu dämpfenden Schwingungen im Vergleich zu der Leistungsaufnahme der Spulen relativ gering ist, hat sich ein zeitlicher Anteil der passiven FD-Phasen von zwischen etwa 5% bis zu wenigen 10% an der Zeitdauer einer elektrischen Periode des Soll-Spulenstroms insbesondere bei einer gewünschten, nominellen, oder für eine Anwendung vorgesehenen oder einer mittleren oder maximalen Motordrehzahl als hinreichend erwiesen, um solche Schwingungen wirksam zu unterdrücken.

Im Fall einer hohen Drehzahl und einer hohen Motorlast kann es vorkommen, dass sich durch den damit verbundenen großen Lastwinkel der Nulldurchgang des tatsächlichen Spulenstroms gegenüber dem Nulldurchgang des Soll-Spulenstroms stark verschiebt, insbesondere wenn die Regelung bzw. der Abbau des Motorstroms zum Beispiel durch Aktivierung der aktiven FD-Phasen (Fig. 4(B)) nicht schnell genug erfolgen kann. In diesem Fall hat die im Nulldurchgang des Soll-Spulenstroms aktivierte passive FD-Phase

(Fig. 4(D)) zwar unmittelbar keine oder nur eine geringe Wirkung. Sofern jedoch der Motor in Schwingungen gerät, so werden diese durch die passiven FD-Phasen in dem Moment effektiv gedämpft, in dem sich der Nulldurchgang des tatsächlichen Spulenstroms durch die durch die Schwingungen verursachte Verschiebung des Lastwinkels mit dem Nulldurchgang des Soll-Spulenstroms überschneidet.

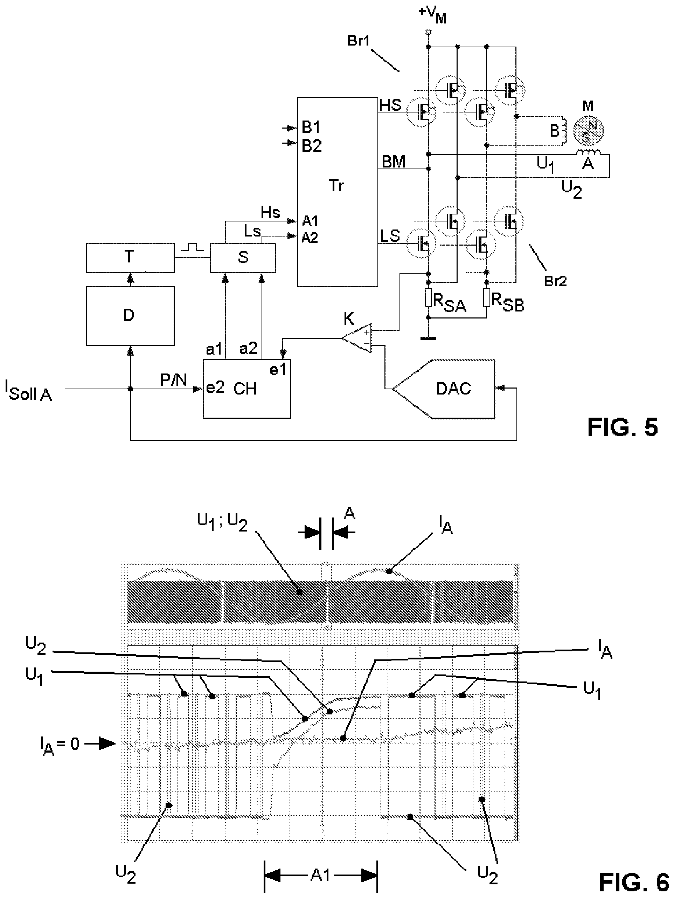

Figur 5 zeigt ein Blockschaltbild einer beispielhaften Ausführungsform einer Schaltungsanordnung zur Durchführung des erfindungsgemäßen Verfahrens für eine der beiden Spulen A, B eines Schrittmotors.

Die Schaltungsanordnung umfasst als an sich bekannte Komponenten eine integrierte Motor-Treiberschaltung Tr, mit der über erste Ausgänge HS (High Side), LS (Low Side) und BM (Brückenmittelpunkt) eine zwischen einer Versorgungsspannungsquelle +V_{M} und Masse liegende erste Brückenschaltung Br1 angesteuert wird, um die Chopper-Phasen, wie sie oben mit Bezug auf Figur 4 beschrieben wurden, zu schalten, und die Ströme mit entsprechenden Polaritäten in eine erste Spule A des Schrittmotors M einzuprägen.

Der tatsächlich durch die erste Spule A fließende Spulenstrom I_{A} wird durch den Spannungsabfall an einem ersten Messwiderstand R_{SA} im Fußpunkt der ersten Brückenschaltung Br1 gemessen.

Die zweite Spule B des Motors M (in diesem Beispielsfall ein 2-Phasen-Motor) ist in eine zweite Brückenschaltung Br2 mit einem zweiten Messwiderstand R_{SB} geschaltet, die in entsprechender Weise wie oben beschrieben über zweite Ausgänge HS (High Side), LS (Low Side) und BM (Brückenmittelpunkt) der Treiberschaltung Tr, die hier nicht dargestellt sind, angesteuert wird.

Das erfindungsgemäße Verfahren ist in entsprechender Weise auch bei einem 3- oder Mehrphasen-Motor mit einer entsprechend höheren Anzahl von Motorspulen anwendbar, in die jeweils die Spulenströme wie oben erläutert mit dem erfindungsgemäßen Verfahren eingeprägt werden.

Die im Folgenden erläuterten erfindungsgemäßen Komponenten der Schaltungsanordnung, mit der die Treiberschaltung Tr über deren Eingänge A1, A2 angesteuert wird, sind nur für eine der beiden Spulen (nämlich eine erste Spule A) des Schrittmotors M gezeigt. Diese Komponenten sind somit noch einmal für die andere Motorspule B (und ggf. für jede weitere Motorspule im Fall eines Mehrphasen-Schrittmotors) zu realisieren und mit entsprechenden Eingängen B1, B2,... der Treiberschaltung Tr zu verbinden.

Die entsprechend der momentanen Polarität des tatsächlichen Spulenstroms an dem Messwiderstand R_{SA} abfallende positive bzw. negative Spannung wird einem ersten Eingang eines Komparators K zugeführt, an dessen zweitem Eingang der Ausgang eines Digital/Analog-Wandlers DAC anliegt, mit dem die zugeführten, vorzugsweise in der digitalen Ebene erzeugten Soll-Spulenstromwerte I_{SollA} für die erste Spule A in analoge Spannungswerte umgewandelt werden, um einen momentanen tatsächlichen Spulenstromwert mit dem momentanen Soll-Spulenstromwert I_{SollA} zu vergleichen. Sofern die Soll-Spulenstromwerte I_{SollA} in analoger Form zugeführt werden, ist der Digital/Analog-Wandler DAC natürlich nicht erforderlich.

Alternativ und analog zu der dargestellten Erfassung mittels eines Komparators K könnten die tatsächlichen Spulenströme auch über einen ADC (Analog/Digital-Wandler) erfasst werden, um die Signalverarbeitung vollständig in der digitalen Ebene vorzunehmen.

Das Ausgangssignal am Ausgang des Komparators K wird einem ersten Eingang e1 eines Choppers CH zugeführt.

An einem zweiten Eingang e2 des Choppers CH liegt ein die vorgegebene Richtung (Polarität) P/N des momentanen Soll-Spulenstromwertes I_{SollA} anzeigendes Signal an.

Der Chopper CH erzeugt an Ausgängen a1, a2 in Abhängigkeit von dem Ausgangssignal des Komparators K die Chopper-Schaltsignale, zum Beispiel in Form von PWM-Pulsen Hs, Ls, die über eine Schalteinrichtung S den Eingängen A1, A2 der Treiberschaltung Tr zugeführt werden und mit denen die Treiberschaltung Tr die Halbleiterschalter der ersten Brückenschaltung Br1 in der Weise öffnet und schließt, dass, wie oben anhand der Figuren 4(A) bis 4(C) erläutert wurde, der tatsächliche Spulenstromverlauf durch die erste Motorspule A zumindest weitgehend mit dem zugeführten Soll-Spulenstromverlauf I_{SollA} übereinstimmt. Entsprechendes gilt für die zweite Motorspule B und die Ansteuerung der zweiten Brückenschaltung Br2 mittels Chopper-Schaltsignalen, die den Eingängen B1, B2 der Treiberschaltung Tr zugeführt werden.

Die Schaltungsanordnung umfasst ferner einen Detektor D für einen StromNulldurchgang, an dessen Eingang die zugeführten Soll-Spulenstromwerte I_{SollA} anliegen, einen Zeitgeber (Timer) T, vorzugsweise in Form eines Monoflops, dessen Eingang mit einem Ausgang des Detektors D verbunden ist, sowie die Schalteinrichtung S mit ersten Eingängen, die mit den Ausgängen a1, a2 des Choppers CH verbunden sind, sowie einem zweiten Eingang (Steuereingang), an dem ein Steuerausgang des Zeitgebers T anliegt. Die Ausgänge der Schalteinrichtung S sind mit den Eingängen A1, A2 der Treiberschaltung Tr verbunden.

Wenn also der Detektor D einen Nulldurchgang des Soll-Spulenstromverlaufes I_{SollA} erfasst, so erzeugt dieser an seinem Ausgang ein Triggersignal, das den Zeitgeber T startet. Der Zeitgeber T erzeugt daraufhin an seinem Steuerausgang ein Steuersignal mit einer vorzugsweise vorbestimmten Dauer, zum Beispiel in Form eines logischen "1"-Pegels, das der Schalteinrichtung S zugeführt wird. Dieses Steuersignal führt dazu, dass die Schalteinrichtung S während des Anliegens des Steuersignals die von den Ausgängen a1, a2 des Choppers CH zugeführten Chopper-Schaltsignale unterbricht und stattdessen ein Nulldurchgangssignal an die Eingänge A2, A2 der Treiberschaltung Tr anlegt, mit dem sämtliche Schalter (MOSFETs) der ersten Brückenschaltung Br1 geöffnet bzw. in den hochohmigen oder sperrenden Zustand geschaltet werden, so dass, wie es in Figur 4(D) dargestellt ist, die passive FD-Phase für die erste Spule A des Motors M nahezu verzögerungsfrei und damit wesentlich schneller aktiviert wird, als es durch eine Ansteuerung der Treiberschaltung Tr mittels des Choppers CH möglich wäre. Entsprechendes gilt für die zweite und ggf. jede weitere Spule des Motors.

Sobald die vorbestimmte Dauer abgelaufen ist, schaltet der Zeitgeber T das Steuersignal wieder ab bzw. erzeugt an seinem Ausgang einen logischen "0"-Pegel. Damit schaltet die Schalteinrichtung S die Chopper-Schaltsignale an den Ausgängen a1, a2 des Choppers CH wieder an die Eingänge A1, A2 der Treiberschaltung Tr durch, so dass die erste Brückenschaltung Br1 wieder gemäß den Figuren 4(A) bis 4(C) angesteuert wird.

Sofern die passiven FD-Phasen jeweils in einem den Nulldurchgang des Soll-Spulenstroms zeitlich umgebenden Bereich und somit auch schon vor dem Erreichen des Nulldurchgangs aktiviert werden sollen, werden die momentanen Soll-Spulenstromwerte I_{SollA} in dem Nulldurchgangsdetektor D vorzugsweise mit einem entsprechenden Schwellwert verglichen, bei dessen betragsmäßigem Unterschreiten das Triggersignal erzeugt wird.

Sowohl dieser Schwellwert, als auch die zeitliche Dauer, für die das Steuersignal am Ausgang des Zeitgebers T erzeugt und damit eine passive FD-Phase aktiviert wird, können entweder (zum Beispiel für einen bestimmten Motortyp) fest vorgegeben oder durch einen Anwender einstellbar sein. Sie können insbesondere an die Motorparameter und/oder eine aktuelle Motorlast und/oder eine aktuelle Motordrehzahl angepasst werden.

In den Figuren 6 bis 10 sind zeitliche Oszillogramme des tatsächlichen (gemessenen) Ist-Spulenstroms I_{A} und der tatsächlichen (gemessenen) Spulenspannungen U₁, U₂ an den beiden Anschlüssen der Spule A, jeweils gegenüber Masse, für verschiedene Drehzahlbereiche dargestellt, wobei innerhalb der mit A1, B1, C1 und D1 markierten Zeitbereiche jeweils eine passive FD-Phase gemäß Figur 4(D) aktiviert ist und somit die Spulenspannungen U₁, U₂ der jeweiligen Induktionsspannung des Motors, die in der Induktivität der Spule bzw. aufgrund der Gegen-EMK des Motors während dieser Zeitbereiche entsteht, entsprechen.

Die passiven FD-Phasen sind auch daran erkennbar, dass die Spulenspannungen U₁, U₂ nicht fest an Masse bzw. die positive Versorgungsspannung gekoppelt sind, sondern sich mit dem Aktivieren der passiven FD-Phase sprungartig um die Diodenspannung erhöhen (erste Spulenspannung U₁) bzw. vermindern (zweite Spulen-Spannung U₂), und während der Zeitdauer einer stromfreien Spule Zwischenpegel einnehmen können.

Außerhalb der Zeitbereiche A1, B1, C1 und D1 ergeben sich die Spulenspannungen U₁, U₂ an den Anschlüssen der Spule aufgrund des Schaltens der Schalter Sw1,...Sw4 der Brückenschaltung Br1 mittels der von dem Chopper CH erzeugten Chopper-Schaltsignale Hs, Ls gemäß den Figuren 4(A) bis 4(C). Auf diese Zeitbereiche wird nachfolgend nicht weiter eingegangen. Mit den Oszillogrammen soll vielmehr nur die Wirkung der passiven FD-Phasen in verschiedenen Drehzahlbereichen und Lastzuständen des Motors verdeutlicht werden.

Figur 6 zeigt die Oszillogramme bei einer niedrigen Motordrehzahl und ohne oder nur geringer Motorlast.

Der im oberen Teil von Figur 6 mit dem Buchstaben "A" markierte zeitliche Bereich ist im unteren Teil expandiert dargestellt. Mit "A1" ist die durch den Zeitgeber T aktivierte passive FD-Phase bezeichnet, die in diesem Fall mit dem Nulldurchgang des tatsächlichen Spulenstroms I_{A} übereinstimmt, wobei der Nulldurchgang entlang der mit I_{A} = 0 bezeichneten Linie verläuft.

Zu Beginn des Zeitbereichs A1 findet eine Rückspeisung des tatsächlichen Spulenstroms I_{A} in die Versorgungsspannungsquelle +V_{M} statt. Erkennbar ist dies daran, dass, wie oben erwähnt wurde, die Spulenspannungen U₁ und U₂ jeweils geringfügig über bzw. unter dem in vorhergehenden Chopperzyklen sichtbaren Spannungsbereich (nämlich dem der Versorgungsspannung) liegen. Die Differenz von ca. 0,7 Volt entsteht aufgrund der Diodenflussspannung der in der Brückenschaltung Br1 verwendeten MOSFET-Schalter Sw1,..Sw4. Die Rückspeisung klingt noch innerhalb des Zeitbereiches A1 der passiven FD-Phase ab, so dass der tatsächliche Spulenstrom I_{A} Null wird und die Spulenspannungen U₁, U₂ nach anfänglicher Rückspeisung nur noch eine geringe Differenz aufgrund der Gegen-EMK aufweisen. Die Beendigung der passiven FD-Phase zeigt sich in den Oszillogrammen an dem steilen Abfall der beiden Spulenspannungen U₁ und U₂.

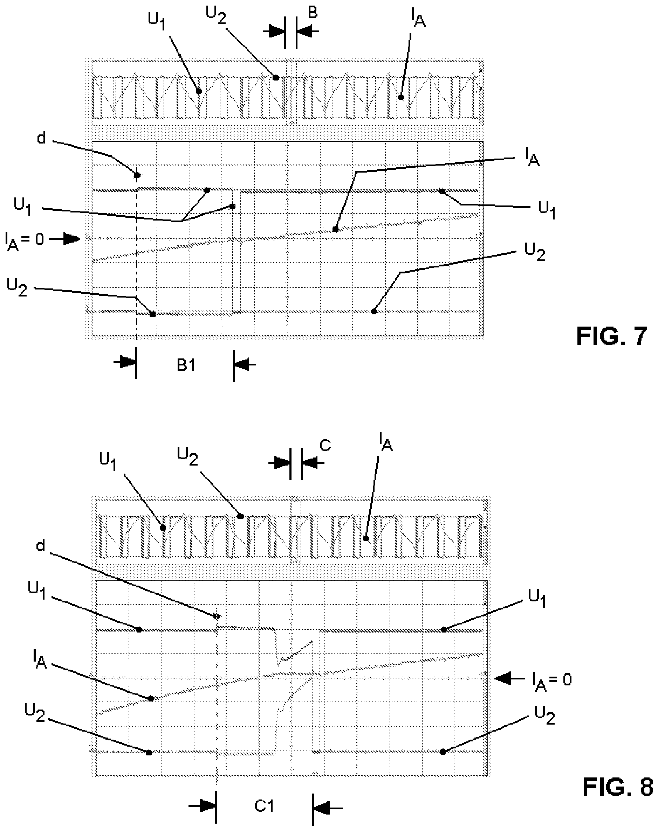

Figur 7 zeigt die Oszillogramme des gemessenen Spulenstroms I_{A} und der an den Anschlüssen der Spule A gemessenen Spulenspannungen U₁, U₂ bei einer mittleren Motordrehzahl und ohne Motorlast. Der im oberen Teil von Figur 7 mit dem Buchstaben "B" markierte zeitliche Bereich ist im unteren Teil expandiert dargestellt.

Mit "B1" ist die durch den Zeitgeber T aktivierte passive FD-Phase bezeichnet, wobei wiederum der Beginn einer FD-Phase zu den mit einer gestrichelten Linie d markierten Sprungstellen im Verlauf der Spulenspannungen U₁, U₂ führt und das Ende der passiven FD-Phase einen steilen Abfall der Spulenspannung U₁ zur Folge hat.

Die passiven FD-Phasen haben in diesem Fall keinen Einfluss auf den tatsächlichen Spulenstrom I_{A}, dessen Nulldurchgang aufgrund des in der gemessenen Situation nur sehr geringen Lastwinkels nur geringfügig gegenüber dem Soll-Spulenstrom I_{SollA} nacheilt und erst nach dem Ende der passiven FD-Phase (Zeitbereiches B1) erreicht wird. Aus dieser Darstellung wird insbesondere deutlich, dass die passive FD-Phase nicht nur keinen Einfluss auf den Spulenstrom I_{A} hat, sondern auch keine Störungen auftreten.

Figur 8 zeigt die Oszillogramme des gemessenen Spulenstroms I_{A} und der an den Anschlüssen der Spule A gemessenen Spulenspannungen U₁, U₂ ebenfalls bei einer mittleren Motordrehzahl, jedoch mit Motorlast und einer dadurch verursachten Verschiebung bzw. Vergrößerung des Lastwinkels, wobei der Beginn der FD-Phase wiederum zu den mit einer gestrichelten Linie d markierten Sprungstellen im Verlauf der Spulenspannungen U₁, U₂ führt und das Ende der passiven FD-Phase einen steilen Abfall der Spulenspannung U₁ zur Folge hat.

Der im oberen Teil von Figur 8 mit dem Buchstaben "C" markierte zeitliche Bereich ist wiederum im unteren Teil expandiert dargestellt.

Innerhalb des Zeitbereiches C1, d.h. der durch den Zeitgeber T aktivierten passiven FD-Phase, erfolgt eine teilweise Rückspeisung des tatsächlichen Spulenstroms I_{A} in die Versorgungsspannungsquelle und damit eine tatsächliche aktivierte Dämpfung.

Außerdem wird durch Aktivierung der passiven FD-Phasen im Nulldurchgang des Soll-Spulenstrom I_{SollA} erreicht, dass der tatsächliche Spulenstrom I_{A} wesentlich stärker ausgeprägt und definierter den Nullstrom erreicht.

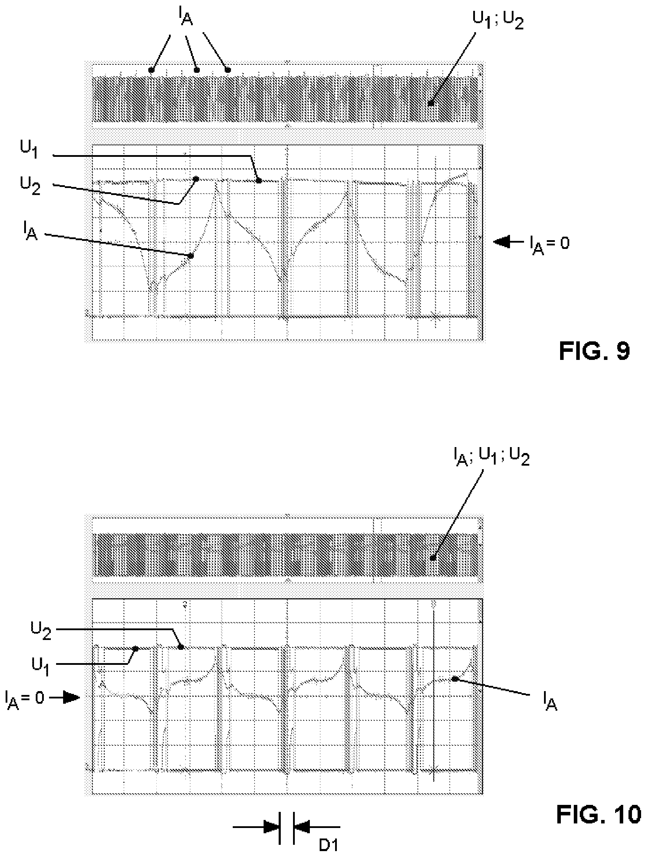

Figur 9 zeigt die Oszillogramme des gemessenen Spulenstroms I_{A} und der an den Anschlüssen der Spule A gemessenen Spulenspannungen U₁, U₂ bei einer hohen Motordrehzahl, ohne dass passive FD-Phasen aktiviert werden.

In diesem Fall befindet sich der Motor in einem resonanten Schwingungszustand, wobei aufgrund der damit verbundenen Lastwinkelschwingungen der Verlauf des Spulenstroms I_{A} verzerrt ist und sich aufgrund der Schwingungen von Zyklus zu Zyklus unterscheidet. Im ungünstigen Fall kann dieser Betriebszustand zu einer Resonanzkatastrophe führen.

Figur 10 zeigt schließlich im Vergleich dazu mit gleichen Maßstäben die Oszillogramme des gemessenen Spulenstroms I_{A} und der an der Spule A gemessenen Spulenspannungen U₁, U₂ wiederum bei einer hohen Motordrehzahl, jedoch mit passiven FD-Phasen.

Mit "D1" ist der durch den Zeitgeber T aktivierte Bereich einer passiven FD-Phase angedeutet. Dadurch wird im Vergleich zu dem in Figur 9 gezeigten Betriebszustand ein großer Teil der Schwingungsenergie absorbiert, und der Spulenstrom I_{A} hat nur wesentlich geringere Amplituden und erreicht wesentlich ausgeprägter und definierter jeweils einen Nullstrom.

## Patentansprüche

1. Verfahren zur Dämpfung von Schrittmotor-Resonanzen, bei dem die Spulen (A; B) eines Schrittmotors (M) in jeweils eine Brückenschaltung (Br1; Br2) aus Halbleiterschaltern (Sw1,..Sw4) geschaltet sind, über die eine Versorgungsspannung (+V_{M}) einer Versorgungsspannungsquelle an die Motorspulen (A; B) angelegt wird, um durch entsprechendes Öffnen und Schließen der Halbleiterschalter (Sw1,.. Sw4) mittels Schaltsignalen (Hs, Ls) die zu jedem Zeitpunkt jeweils vorgegebenen Soll-Spulenstromwerte mit vorgegebener Polarität in die Motorspulen (A; B) einzuprägen,
wobei jeweils ein Detektor (D) einen Nulldurchgang oder einen den Nulldurchgang zeitlich umgebenden Bereich des vorgegebenen Soll-Spulenstroms (I_{SollA}; I_{SollB}) jeder Motorspule (A; B) erfasst und durch jeden Detektor (D) jeweils ein Zeitgeber (T) aktiviert wird,
wobei zumindest bei mittleren und hohen Motordrehzahlen im Nulldurchgang oder in einem den Nulldurchgang zeitlich umgebenden Bereich des vorgegebenen Soll-Spulenstroms (I_{SollA}; I_{SollB}) jeder Motorspule (A; B) durch ein Schaltsignal eine passive FD-Phase aktiviert wird, während der für eine durch den Zeitgeber (T) bestimmte Zeitdauer alle Halbleiterschalter (Sw1,...Sw4) geöffnet bzw. sperrend geschaltet werden, um dadurch einen in der betreffenden Motorspule (A; B) fließenden Spulenstrom (I_{A}; I_{B}) entweder über in den Halbleiterschaltern (Sw1, Sw4) intrinsisch vorhandene Invers- bzw. Bodydioden und/oder über parallel zu den Halbleiterschaltern (Sw1,...Sw4) in Sperrrichtung zwischen die positive Versorgungsspannung (+V_{M}) und Masse geschaltete Dioden (D1,..D4) in die Versorgungsspannungsquelle zurückzuspeisen.

2. Verfahren nach Anspruch 1, bei dem die passiven FD-Phasen zeitlich so aktiviert werden, dass sie einen zeitlichen Anteil von zwischen etwa 5% bis zu wenigen 10% der Zeitdauer einer elektrischen Periode des Soll-Spulenstroms (I_{SollA}; I_{SollB}) aufweisen.

3. Verfahren nach Anspruch 1 oder 2, bei dem die passiven FD-Phasen unabhängig von der Motordrehzahl aktiviert werden.

4. Verfahren nach Anspruch 1 oder 2, bei dem die passiven FD-Phasen auch dann aktiviert werden, wenn der Motor eine einen vorbestimmten Grenzwert überschreitende Drehzahländerung pro Zeiteinheit ausführt.

5. Verfahren nach mindestens einem der vorhergehenden Ansprüche, in Kombination mit einem Chopper-Verfahren, bei dem in jede der Motorspulen (A; B) die für jeden Zeitpunkt durch jeweils einen für jede Motorspule (A; B) zugeführten Soll-Spulenstrom (I_{SollA}; I_{SollB}) vorgegebenen Stromwerte durch Ansteuerung der betreffenden Brückenschaltung (Br1, Br2) mittels PWM-Strompulsen eingeprägt werden.

6. Schaltungsanordnung zur Dämpfung von Schrittmotor-Resonanzen, insbesondere zur Durchführung eines Verfahrens nach einem der vorhergehenden Ansprüche, bei der die Spulen (A; B) eines Schrittmotors (M) in jeweils eine Brückenschaltung (Br1; Br2) aus Halbleiterschaltern (Sw1,..Sw4) geschaltet sind, über die eine Versorgungsspannung (+V_{M}) einer Versorgungsspannungsquelle an die Motorspulen (A; B) angelegt wird, um durch entsprechendes Öffnen und Schließen der Halbleiterschalter (Sw1,..Sw4) mittels Schaltsignalen (Hs, Ls) die zu jedem Zeitpunkt jeweils vorgegebenen Soll-Spulenstromwerte mit vorgegebener Polarität in die Motorspulen (A; B) einzuprägen,
**gekennzeichnet durch**
jeweils einen Detektor (D) zur Erfassung eines Nulldurchgangs des zugeführten Soll-Spulenstroms (I_{SollA}; I_{SollB}) jeder Motorspule (A; B),
jeweils einen Zeitgeber (T), der durch den Detektor (D) aktiviert wird,
sowie eine Schalteinrichtung (S), mit der zumindest bei mittleren und hohen Motordrehzahlen für eine durch den Zeitgeber (T) bestimmte Zeitdauer alle Halbleiterschalter (Sw1,..Sw4) geöffnet bzw. sperrend geschaltet werden, um dadurch einen in der betreffenden Motorspule (A; B) fließenden Spulenstrom entweder über in den Halbleiterschaltern (Sw1, Sw4) intrinsisch vorhandene Invers- bzw. Bodydioden und/oder über parallel zu den Halbleiterschaltern (Sw1,...Sw4) in Sperrrichtung zwischen die positive Versorgungsspannung (+V_{M}) und Masse geschaltete Dioden (D1,..D4) in die Versorgungsspannungsquelle zurückzuspeisen.

7. Schaltungsanordnung nach Anspruch 6, bei der die Halbleiterschalter (Sw1,..Sw4) MOSFETs sind.

8. Schaltungsanordnung nach Anspruch 6 oder 7, bei der die durch den Zeitgebers (T) bestimmte Zeitdauer vorbestimmt oder durch einen Anwender einstellbar ist.

9. Schaltungsanordnung nach mindestens einem der Ansprüche 6 bis 8, bei der der Zeitgeber (T) ein Monoflop ist.

10. Schaltungsanordnung nach mindestens einem der Ansprüche 6 bis 9, bei der der Zeitgeber (T) für die bestimmte Zeitdauer ein Steuersignal erzeugt, das der Schalteinrichtung (S) zugeführt wird, wobei die Schalteinrichtung (S) während des Anliegens des Steuersignals die von den Ausgängen (a1) des Choppers (CH) zugeführten Chopper-Schaltsignale (Hs, Ls) unterbricht und stattdessen ein Nulldurchgangssignal an die Eingänge (A1, A2) der Treiberschaltung (Tr) anlegt, mit dem alle Halbleiterschalter (Sw1,..Sw4) geöffnet bzw. sperrend geschaltet werden.

11. Schaltungsanordnung nach mindestens einem der Ansprüche 6 bis 10, bei der der Detektor (D) die zugeführten Soll-Spulenstromwerte (I_{SollA}; I_{SollB}) mit einem vorbestimmten Schwellwert vergleicht, wobei der Zeitgeber (T) aktiviert wird, wenn die zugeführten Soll-Spulenstromwerte den Schwellwert betragsmäßig unterschreiten.

## Claims

1. Method for damping stepper motor resonances, in which the coils (A; B) of a stepper motor (M) are each connected into a bridge circuit (Br1; Br2) comprising semiconductor switches (Sw1, ..Sw4), via which a supply voltage (+V_{M}) of a supply voltage source is applied to the motor coils (A; B) in order, by corresponding opening and closing of the semiconductor switches (Sw1, ..Sw4) by means of switching signals (Hs, Ls), to impress into the motor coils (A; B) target coil current values which are respectively preset for each point in time and which have a preset polarity,
wherein in each case a detector (D) detects a zero crossing or a temporal range surrounding the zero crossing of the preset target coil current (I_{SollA}; I_{SollB}) of each motor coil (A; B) and a timer (T) is activated by each detector (D),
wherein a passive FD-phase is activated by means of a switching signal at least at medium and high motor speeds in the zero crossing or in a temporal range surrounding the zero crossing of the preset target coil current (I_{SollA}; I_{SollB}) for each motor coil (A; B), during which passive FD-phase all semiconductor switches (Sw1, ..Sw4) are opened or switched blocking for a specified period of time determined by the timer (T), in order to thereby feed a coil current (I_{A}; I_{B}) flowing in the related motor coil (A; B) back into the supply voltage source either via inverse or body diodes intrinsically existing in the semiconductor switches (Sw1, Sw4) and/or via diodes (D1,..D4) connected in parallel to the semiconductor switches (Sw1, ..Sw4) in the reverse direction between the positive supply voltage (+V_{M}) and ground potential.

2. Method according to claim 1, wherein the passive FD-phases are temporally activated in such a way that they have a temporal portion of between about 5% and a few 10% of the temporal duration of an electrical period of the target coil current (I_{SollA}; I_{SollB}).

3. Method according to claim 1 or 2, wherein the passive FD-phases are activated independently of the motor speed.

4. Method according to claim 1 or 2, wherein the passive FD-phases are also activated when the motor performs a speed change per time unit exceeding a predetermined limit value.

5. Method according to at least one of the preceding claims, in combination with a chopper method, wherein the current values preset for each point in time by a respective target coil current (I_{SollA}; I_{SollB}) supplied for each motor coil (A; B) are impressed into each of the motor coils (A; B) by driving the corresponding bridge circuit (Br 1 , Br 2 ) by means of PWM current pulses.

6. Circuit arrangement for damping stepper motor resonances, in particular for carrying out a method according to anyone of the preceding claims, in which the coils (A; B) of a stepper motor (M) are each connected into a bridge circuit (Br1; Br2) comprising semiconductor switches (Sw1,..Sw4), via which a supply voltage (+V_{M}) of a supply voltage source is applied to the motor coils (A; B), in order to impress into the motor coils (A; B) target coil current values which are respectively preset for each point in time and which have a preset polarity, by correspondingly opening and closing of the semiconductor switches (Sw1,..Sw4) by means of switching signals (Hs, Ls),
**characterized by**
in each case a detector (D) for detecting a zero crossing of the supplied target coil current (I_{SollA}); I_{SollB}) of each motor coil (A; B),
in each case a timer (T) which is activated by the detector (D),
and a switching device (S) with which, at least at medium and high motor speeds for a period of time determined by the timer (T), all the semiconductor switches (Sw1,..Sw4) are opened or switched blocking, in order to thereby feed a coil current flowing in the related motor coil (A; B) back into the supply voltage source either via inverse or body diodes intrinsically existing in the semiconductor switches (Sw1, Sw4), and/or via diodes (D1,..D4) connected in parallel to the semiconductor switches (Sw1,..Sw4) in the reverse direction between the positive supply voltage (+V_{M}) and ground potential.

7. Circuit arrangement according to claim 6, wherein the semiconductor switches (Sw1,..Sw4) are MOSFETs.

8. Circuit arrangement according to claim 6 or 7, wherein the temporal duration determined by the timer (T) is predetermined or adjustable by a user.

9. Circuit arrangement according to at least one of claims 6 to 8, wherein the timer (T) is a monoflop.

10. Circuit arrangement according to at least one of the claims 6 to 9, wherein the timer (T) generates a control signal during the determined temporal duration, which is fed to the switching device (S), the switching device (S) interrupting the chopper switching signals (Hs, Ls) fed from the outputs (a1) of the chopper (CH) during the application of the control signal, and instead applying a zero crossing signal to the inputs (A1, A2) of the driver circuit (Tr), by means of which all semiconductor switches (Sw1,..Sw4) are opened or switched blocking.

11. Circuit arrangement according to at least one of the claims 6 to 10, wherein the detector (D) compares the supplied target coil current values (I_{SollA}; I_{SollB}) with a predetermined threshold value, the timer (T) being activated when the amount of the supplied target coil current values falls below the threshold value.

## Revendications

1. Procédé pour amortir des résonances d'un moteur pas à pas, dans lequel les bobines (A ; B) d'un moteur pas à pas (M) sont couplées chacune dans un circuit en pont (Br1 ; Br2) composé d'interrupteurs à semiconducteurs (Sw1, ..., Sw4), par l'intermédiaire desquels une tension d'alimentation (+V_{M}) d'une source de tension d'alimentation est appliquée aux bobines (A ; B) du moteur afin d'appliquer aux bobines (A ; B) du moteur, par ouverture et fermeture correspondantes des interrupteurs à semiconducteurs (Sw1, ..., Sw4), au moyen de signaux de commutation (Hs, Ls), les valeurs de courant de bobine nominales respectivement allouées à chaque instant avec une polarité allouée,
dans lequel un détecteur (D) détecte respectivement un passage par zéro ou une plage du courant de bobine nominal alloué (I_{SollA} ; I_{SollB}) de chaque bobine (A ; B) de moteur entourant dans le temps le passage par zéro et un temporisateur (T) est activé respectivement par chaque détecteur (D),
dans lequel une phase FD passive est activée par un signal de commutation au moins à des régimes moteur moyens et élevés au passage par zéro ou dans une plage du courant de bobine nominal alloué (I_{SollA} ; I_{SollB}) de chaque bobine (A ; B) de moteur entourant dans le temps le passage par zéro, phase pendant laquelle tous les interrupteurs à semiconducteurs (Sw1, ..., Sw4) sont commutés ouverts ou bloqués pendant une durée déterminée par le temporisateur (T) pour ainsi réinjecter dans la source de tension d'alimentation un courant (I_{A;} I_{B}) de bobine circulant dans la bobine (A ; B) de moteur concernée, soit par l'intermédiaire de diodes inverses ou de corps intrinsèquement présentes dans les interrupteurs à semiconducteurs (Sw1, Sw4) et/ou par l'intermédiaire de diodes (D1, ..., D4) couplées en parallèle avec les interrupteurs à semiconducteurs (Sw1, ..., Sw4) dans le sens de blocage entre la tension d'alimentation positive (+V_{M}) et la masse.

2. Procédé selon la revendication 1, dans lequel les phases FD passives sont activées dans le temps de manière à ce qu'elles présentent une part temporelle comprise entre 5 % environ et quelques 10 % de la durée d'une période électrique du courant de bobine nominal (I_{SollA} ; I_{SollB}).

3. Procédé selon la revendication 1 ou 2, dans lequel les phases FD passives sont activées indépendamment du régime du moteur.

4. Procédé selon la revendication 1 ou 2, dans lequel les phases FD passives sont également activées lorsque le moteur exécute une variation de régime par unité de temps dépassant une valeur limite prédéterminée.

5. Procédé selon au moins l'une des revendications précédentes, en combinaison avec un procédé de hachage, dans lequel les valeurs de courant prédéterminées pour chaque instant par respectivement un courant de bobine nominal (I_{SollA} ; I_{SollB}) injecté pour chaque bobine de moteur (A ; B) sont gravées dans chacune des bobines (A ; B) de moteur par commande d'amorçage du circuit en pont (Br1, Br2) concerné au moyen d'impulsions de courant de modulation de largeur d'impulsion.

6. Agencement de circuit pour amortir des résonances d'un moteur pas à pas, en particulier pour l'exécution d'un procédé selon l'une quelconque des revendications précédentes, dans lequel les bobines (A ; B) d'un moteur pas à pas (M) sont couplées chacune dans un circuit en pont (Br1 ; Br2) composé d'interrupteurs à semiconducteurs (Sw1, ..., Sw4), par l'intermédiaire desquels une tension d'alimentation (+V_{M}) d'une source de tension d'alimentation est appliquée aux bobines (A ; B) du moteur afin d'appliquer aux bobines (A ; B) du moteur, par ouverture et fermeture correspondantes des interrupteurs à semiconducteurs (Sw1, ..., Sw4), au moyen de signaux de commutation (Hs, Ls), les valeurs de courant de bobine nominales respectivement allouées à chaque instant avec une polarité allouée,
**caractérisé par**
respectivement un détecteur (D) pour détecter un passage par zéro du courant de bobine nominal (I_{SollA} ; I_{SollB}) injecté de chaque bobine (A ; B) de moteur,
respectivement un temporisateur (T) qui est activé par le détecteur (D),
ainsi qu'un dispositif de commutation (S), à l'aide duquel, au moins à des régimes moteur moyens et élevés, tous les interrupteurs à semiconducteurs (Sw1, ..., Sw4) sont commutés ouverts ou bloqués pendant une durée déterminée par le temporisateur (T) pour ainsi réinjecter dans la source de tension d'alimentation un courant de bobine circulant dans la bobine (A ; B) de moteur concernée, soit par l'intermédiaire de diodes inverses ou de diodes de corps intrinsèquement présentes dans les interrupteurs à semiconducteurs (Sw1, Sw4) et/ou par l'intermédiaire de diodes (D1, ..., D4) couplées en parallèle avec les interrupteurs à semiconducteurs (Sw1, ..., Sw4) dans le sens de blocage entre la tension d'alimentation positive (+V_{M}) et la masse.

7. Agencement de circuit selon la revendication 6, dans lequel les interrupteurs à semiconducteurs (Sw1, ..., Sw4) sont des transistors à effet de champ métal-oxyde-semiconducteurs (MOSFET).

8. Agencement de circuit selon la revendication 6 ou 7, dans lequel la durée déterminée par le temporisateur (T) est prédéterminée ou réglable par un utilisateur.

9. Agencement de circuit selon l'une au moins des revendications 6 à 8, dans lequel le temporisateur (T) est un multivibrateur monostable.

10. Agencement de circuit selon l'une au moins des revendications 6 à 9, dans lequel le temporisateur (T) génère pendant la durée déterminée un signal de commande qui est injecté au dispositif de commutation (S), le dispositif de commutation (S) interrompant, pendant la durée d'application du signal de commande, les signaux de commutation (Hs, Ls) de hacheur injectés depuis les sorties (a1) du hacheur (CH) et appliquant à la place un signal de passage par zéro aux entrées (A1, A2) du circuit d'attaque (Tr), avec lequel tous les interrupteurs à semiconducteurs (Sw1, ..., Sw4) sont commutés ouverts ou bloqués.

11. Agencement de circuit selon l'une au moins des revendications 6 à 10, dans lequel le détecteur (D) compare les valeurs de courant de bobine nominales (I_{SollA} ; I_{SollB}) injectées à une valeur seuil prédéterminée, le temporisateur (T) étant activé lorsque les valeurs de courant de bobine nominales injectée sont inférieures en valeur absolue à la valeur seuil.
